# EUROPÄISCHE PATENTSCHRIFT

(11) **EP 3 614 100 B1**
(45) Veröffentlichungstag und Bekanntmachung des Hinweises auf die Patenterteilung: **07.06.2023**
(21) Anmeldenummer: 19191901.8
(22) Anmeldetag: 15.08.2019
(51) Int. Cl.: G01C 5/00, G01C 15/00, E04G 1/00, E04G 21/10

(54) **VORRICHTUNG ZUM NIVELLIEREN VON GUSSMASSEN WIE FLIESSESTRICH ODER PUMPBETON SOWIE MESSEINRICHTUNG MIT EINER DERARTIGEN VORRICHTUNG**
DEVICE FOR LEVELLING CAST MATERIAL SUCH AS FLOWING PLASTER OR PUMPING CONCRETE AND MEASURING DEVICE COMPRISING SUCH A DEVICE
DISPOSITIF DE NIVELLEMENT DE MASSES DE COULÉE TELLE QU'UNE CHAPE OU BÉTON POMPÉ AINSI QUE DISPOSITIF DE MESURE DOTÉ D'UN TEL DISPOSITIF

(30) Priorität: 21.08.2018 DE 102018120299
(43) Veröffentlichungstag der Anmeldung: 26.02.2020
(73) Patentinhaber: Artamonow, Alexej, 78048 Villingen-Schwenningen (DE)
(72) Erfinder: Artamonow, Alexej, 78048 Villingen-Schwenningen (DE)
(74) Vertreter: Westphal, Mussgnug & Partner Patentanwälte mbB

(56) Entgegenhaltungen:
- AT-A1- 514 294
- US-B1- 6 760 974

## Beschreibung

Die vorliegende Erfindung betrifft eine Vorrichtung zum Nivellieren von Gussmassen wie Fließestrich oder Pumpbeton.

Weiterhin betrifft die Erfindung eine Messeinrichtung mit einer derartigen Vorrichtung.

Unter Nivellieren soll im Folgenden das Ausfüllen insbesondere eines Raums mit der Gussmasse auf die gewünschte Höhe verstanden werden. Ein hervorzuhebendes Beispiel von Gussmassen stellt Fließestrich dar. Unter einer Gussmasse soll eine Masse verstanden werden, welche beim Einbringen in den Raum so flüssig ist, dass sie mittels einer Förderpumpe förderbar ist. Ist das gewünschte Volumen an Gussmasse in den Raum eingebracht, lässt man die Gussmasse für eine bestimmte Zeit trocknen, wodurch die Gussmasse aushärtet. Aufgrund der Tatsache, dass die Gussmasse während des Einbringens in den Raum flüssig ist, verteilt sie sich mehr oder weniger schnell gleichmäßig im Raum und nimmt ein einheitliches Niveau ein. Es ist daher nicht notwendig, die Gussmasse zu glätten.

Um einen Raum auf die gewünschte Höhe mit Fließestrich nivellieren zu können, werden sogenannte Nivellierböcke eingesetzt, wie sie beispielsweise aus der DE 100 49 867 A1 oder der DE 200 17 303 U1 bekannt sind. Derartige Nivellierböcke verfügen üblicherweise über drei Standbeine, an denen ein Gewindestab befestigt ist, entlang welchem eine Niveauscheibe durch Drehen bewegt werden kann.

Zum Nivellieren der Gussmasse wird der Nivellierbock auf den Boden des Raums gestellt, der mit der Gussmasse ausgefüllt werden soll. Die Gussmasse wird mit einer Förderpumpe solange in den Raum gefördert, bis dass die Oberfläche der Gussmasse bündig mit der Nivellierscheibe ist. Die Gussmasse weist nun die gewünschte Höhe auf. Anschließend wird der Nivellierbock entfernt.

Eine Vorrichtung, welche einem Nivellierbock nicht unähnlich ist, ist in der US 6 760 974 B1 offenbart. Diese Vorrichtung weist mehrere teleskopartig angeordnete und relativ zueinander verschiebbare Rohre auf. Die Rohre werden im bestimmungsgemäßen Gebrauch vertikal angeordnet. Am untersten Rohr ist ein Standfuß angeordnet, der auf den Boden des Raums aufgesetzt werden kann. Zudem ist am untersten Rohr ein Höhenanzeiger angeordnet, welcher eine ähnliche Funktion aufweist wie die Nivellierscheibe eines Nivellierbocks. Der Höhenanzeiger kann durch Verschieben der Rohre relativ zueinander auf die gewünschte Höhe eingestellt werden. Mithilfe von Verschlusselementen kann die Verschiebbarkeit der Rohre unterbunden werden, wenn der Höhenanzeiger auf die gewünschte Höhe eingestellt ist. Ähnlich wie beim Nivellierbock ist die gewünschte Höhe der Gussmasse dann erreicht, wenn die Oberfläche der Gussmasse bündig mit dem Höhenanzeiger ist.

Ein Nivellierbock ermöglicht die Nivellierung der Gussmasse nur an einer Stelle im Raum. Um eine möglichst genaue Nivellierung zu erreichen, sollte die Höhe der Gussmasse an mehreren Stellen des Raums bestimmt werden. Daher werden mehrere Nivellierböcke verwendet. Insbesondere bei Umbauten kann es vorkommen, dass die Böden der Räume ein unterschiedliches Niveau haben, welche mit dem Fließestrich ausgeglichen werden sollen. In diesem Fall müssen die Nivellierböcke der jeweiligen Räume auf ein unterschiedliches Niveau eingestellt werden, was umständlich und zeitaufwendig ist und Fehler verursachen kann.

Darüber hinaus stellen die Nivellierböcke ein gewisses Hindernis dar. Nicht selten kommt es vor, dass Personen an den Nivellierböcken hängen bleiben und stolpern. Wenn der Nivellierbock beim Umfallen in den Fließestrich fällt, muss der Nivellierbock anschließend gründlich und zeitintensiv gereinigt werden.

Wie eingangs erwähnt, weist die Gussmasse dann die gewünschte Höhe auf, wenn sie bündig mit der Niveauscheibe abschließt. Der Nivellierbock steht folglich bis zur Niveauscheibe in der Gussmasse, so dass er auch nach dem Betrieb gründlich gereinigt werden muss. Je mehr Nivellierböcke eingesetzt werden, desto größer ist der Reinigungsaufwand.

In der AT 514 294 A1 ist eine Vorrichtung zum Nivellieren von Schüttungen offenbart, bei welcher eine Abziehleiste ähnlich wie ein Rechen über die Schüttungen gezogen wird, um diese auf eine einheitliche Höhe zu bringen. Die dort offenbarte Vorrichtung eignet sich nur für Feststoffe, nicht aber für Gussmassen, die mit einer Förderpumpe förderbar sind.

Aufgabe einer Ausführungsform der vorliegenden Erfindung ist es, eine Vorrichtung zu schaffen, mit welcher es mit einfachen Mitteln möglich ist, eine Gussmasse mit hoher Genauigkeit und Zuverlässigkeit bei im Vergleich zu den oben diskutieren Nivellierböcken einem verringerten Zeitaufwand zu nivellieren. Insbesondere soll der Reinigungsaufwand reduziert werden und die Gefahr des Hängenbleibens und des Stolperns verhindert werden. Des Weiteren liegt einer Ausgestaltung der vorliegenden Erfindung die Aufgabe zugrunde, eine Messeinrichtung zu schaffen, die es auch in großen Räumen und in mehreren Räumen mit unterschiedlichen Bodenniveaus auf einfache und zumindest nahezu fehlerfreie Weise bei geringem Zeitaufwand ermöglicht, eine Gussmasse zu nivellieren.

Diese Aufgabe wird mit den in den Ansprüchen 1 und 9 angegebenen Merkmalen gelöst. Vorteilhafte Ausführungsformen sind Gegenstand der Unteransprüche.

Eine Ausführungsform der Erfindung betrifft eine Vorrichtung zum Nivellieren von Gussmassen wie Fließestrich, Pumpbeton oder dergleichen, umfassend einen Auftriebskörper, welcher auf der zu nivellierenden Gussmasse schwimmt, einen Markierungsabschnitt, welcher als ein mit dem Auftriebskörper verbundener Markierungskörper ausgebildet ist oder vom Auftriebskörper gebildet wird, und eine auf dem Markierungsabschnitt angeordnete Markierung, mit welcher die Höhe der Gussmasse bestimmbar ist.

Aufgrund der im Vergleich zu Nivellierböcken einfacheren und besser zugänglichen Form ist bei der vorschlagsgemäßen Vorrichtung der Reinigungsaufwand geringer, weshalb die zum Reinigen benötigte Zeit gegenüber Nivellierböcken deutlich verringert werden kann. Zudem wird die Gefahr des Stolperns verringert.

Nach Maßgabe einer weiteren Ausführungsform ist der Auftriebskörper plattenförmig oder scheibenförmig ausgebildet.

Diese Formgebung der Auftriebskörper verleiht der Vorrichtung eine gute Stabilität. Ein unbeabsichtigtes Umkippen der Vorrichtung wird verhindert.

In einer weitergebildeten Ausführungsform kann der Markierungskörper als ein Rohr oder trichterförmig ausgebildet sein. Wie später beschrieben wird, kann es sein, dass die zur Bestimmung der Höhe der Gussmasse verwendeten Quellen zum Erzeugen von elektromagnetischen Wellen nur mit einem bestimmten Abstand zum Boden des Raums, der mit der Gussmasse ausgefüllt werden soll, angeordnet werden kann. Um den Abstand zu überbrücken, muss der Markierungskörper entsprechend lang ausgeführt werden. Die Anpassung der Länge des Markierungskörpers lässt sich mit einem Rohr sehr einfach umsetzen. Zudem kann die auf dem Rohr angeordnete Markierung von allen Seiten gleichgut abgelesen werden. Darüber hinaus lässt sich ein Rohr gut ergreifen, so dass die Vorrichtung handlich ist.

Bei einer trichterförmigen Ausbildung des Markierungskörpers erweitert sich der Durchmesser des Markierungskörpers zum Auftriebskörper hin. Idealerweise schließt der trichterförmige Markierungskörper bündig mit dem Auftriebskörper ab. Neben den oben diskutierten Vorteilen der rohrförmigen Ausbildung kommt bei der trichterförmigen Ausgestaltung der Vorteil hinzu, dass die Gussmasse ablaufen kann und schwer zugängliche Bereiche vermieden werden können. Bei der trichterförmigen Ausgestaltung kann die Oberfläche des Markierungskörpers bezogen auf eine durch die Mittelachse des Markierungskörpers verlaufende Schnittebene eben sein, so dass ein kegelförmiger Abschnitt entsteht. Alternativ kann die Oberfläche gewölbt sein. Zudem erhöht die trichterförmige Ausgestaltung des Markierungskörpers die Stabilität der Vorrichtung.

Grundsätzlich können der Auftriebskörper und der Markierungskörper als separate Bauteile ausgebildet und mit geeigneten Mitteln miteinander verbunden sein. Es ist aber genauso gut möglich, die Vorrichtung einteilig auszuführen und alle Körper zu einem Bauteil zusammenzufassen. In der einteiligen Ausführung müssen die Körper der Vorrichtung nicht in einem zusätzlichen Arbeitsgang miteinander verbunden werden. Auch ein Lösen der Körper voneinander wird verhindert.

Eine weitergebildete Ausführungsform zeichnet sich dadurch aus, dass die Vorrichtung eine Kopplungseinheit zum Koppeln der Vorrichtung mit einem Kopplungspartner aufweist. Wie eingangs erwähnt, schwimmt die vorschlagsgemäße Vorrichtung auf der Gussmasse. Sie ist daher in Bodennähe angeordnet. Der Kopplungspartner kann eine Stange umfassen, die mit der Kopplungseinheit zusammenwirken kann. Mit dem Kopplungspartner kann die Vorrichtung schnell und einfach im Raum verteilt werden. Es ist daher auf einfache Weise möglich, nur mit einer einzigen Vorrichtung die Höhe der Gussmasse während des Auffüllens der Gussmasse an mehreren Stellen des Raums zu bestimmen, wodurch die Bestimmung sehr genau ist.

Nach Maßgabe einer weiteren Ausführungsform ist die Kopplungseinheit als ein Haken oder eine Öse ausgebildet. Haken und Ösen sind einfache Ausführungsformen der Kopplungseinheit, die mit dem Kopplungspartner gut ergriffen werden können. Auch das Lösen des Kopplungspartners von der Kopplungseinheit ist einfach durchführbar. Alternativ können auch Magnete oder dergleichen eingesetzt werden.

Eine weitere Ausführungsform zeichnet sich dadurch aus, dass die Markierung zur Interaktion mit elektromagnetischen Wellen ausgebildet ist. Die Verwendung von elektromagnetischen Wellen ermöglicht eine sehr genaue Nivellierung, da diese in einer sehr genau definierten Ebene nahezu ohne Höhenabweichungen ausgestrahlt werden können. Darüber hinaus haben die Wellen keinen nennenswerten störenden Einfluss auf die im Raum auszuführenden Arbeiten. Insofern kann in dieser Ausführungsform die vorschlagsgemäße Vorrichtung für sehr genaue Nivellierungen verwendet werden. Die Interaktion mit den elektromagnetischen Wellen kann beispielsweise dadurch geschehen, dass die elektromagnetischen Wellen von der Markierung definiert reflektiert werden, so dass die reflektierten elektromagnetischen Wellen von einem Detektor dann empfangen werden können, wenn die elektromagnetischen Wellen auf die Markierung treffen. Wenn die elektromagnetischen Wellen auf die Markierung treffen, ist die gewünschte Höhe der Gussmasse erreicht.

Nach Maßgabe einer weiteren Ausführungsform weist die Vorrichtung einen Sensor auf, welcher die Interaktion der Markierung mit den elektromagnetischen Wellen registriert und welcher ein entsprechendes Signal erzeugt. Beispielsweisekann der Sensor als Photodiode ausgestaltet sein. Wenn ein Lichtstrahl auf die Markierung trifft, erzeugt die Photodiode ein entsprechendes Signal, welches beispielsweise an einen Empfänger übermittelt werden kann, der ein akustisches oder optisches Signal ausgibt. Der Empfänger kann in der Vorrichtung selbst angeordnet sein, allerdings kann der Empfänger auch an der Lichtquelle oder an einem beliebigen anderen Gerät angeordnet sein. Eine Integration in eine Smartphone-Application ist denkbar, so dass eine zuständige Person einen Hinweis bekommt, dass die Gussmasse die gewünschte Höhe erreicht hat, auch wenn sich diese Person weiter entfernt von den betreffenden Räumen aufhält.

Eine Ausgestaltung der Erfindung betrifft eine Messeinrichtung zum Nivellieren von Gussmassen wie Fließestrich, Pumpbeton oder dergleichen, umfassend eine Quelle zum Erzeugen und zum höhendefinierten Aussenden von elektromagnetischen Wellen, und zumindest eine Vorrichtung nach einer der vorherigen Ausführungsformen, wobei die Markierung mit den elektromagnetischen Wellen zum Nivellieren der Gussmassen zusammenwirkt.

Die technischen Effekte und Vorteile, die sich mit der vorschlagsgemäßen Messeinrichtung erreichen lassen, entsprechen denjenigen, die für die vorliegende Vorrichtung erörtert worden sind. Zusammenfassend sei darauf hingewiesen, dass die Gefahr des Stolperns und der Reinigungsaufwand gegenüber Nivellierböcken reduziert wird.

Die Quelle, mit welcher die elektromagnetischen Wellen erzeugt werden, muss möglichst exakt horizontal ausgerichtet und auf eine Höhe gebracht werden, welche dann, wenn die elektromagnetischen Wellen mit der Markierung zusammenwirken, anzeigt, dass die Gussmasse die gewünschte Höhe erreicht hat. Es genügt, nur eine Vorrichtung zu verwenden, während bei der Verwendung von Nivellierböcken insbesondere bei größeren oder mehreren Räumen jeder der eingesetzten Nivellierböcke auf die gewünschte Höhe der Gussmasse eingestellt werden muss. Bei der Verwendung der vorschlagsgemäßen Vorrichtung ist dies selbst dann nicht notwendig, wenn Räume mit unterschiedlichen Bodenniveaus mit der Gussmasse ausgefüllt werden sollen.

In einer weiteren Ausgestaltung kann die Quelle als eine Laserquelle ausgebildet sein, welche Laserstrahlen erzeugt. Laserstrahlen werden zum Bestimmen von Entfernungen häufig verwendet, so dass Laserquellen weit verbreitet und daher schnell und kostengünstig verfügbar sind.

Nach Maßgabe einer fortgebildeten Ausgestaltung umfasst die Messeinrichtung ein Stativ zum Aufnehmen der Quelle. Das Stativ sorgt dafür, dass die Quelle sicher aufgenommen wird und die Gefahr des Umkippens gering gehalten wird.

Nach einer weitergebildeten Ausgestaltung weist das Stativ eine höhenverstellbare Aufnahme für die Quelle auf. Mit der höhenverstellbaren Aufnahme können die elektromagnetischen Wellen in der gewünschten Höhe ausreichend genau horizontal ausgesendet werden.

Beispielhafte Ausführungsformen der Erfindung werden im Folgenden unter Bezugnahme auf die beigefügten Zeichnungen näher erläutert. Es zeigen
- Figur 1: eine erste Ausführungsform einer erfindungsgemäßen Vorrichtung zum Nivellieren von Gussmassen wie Fließestrich oder Pumpbeton,
- Figur 2: eine zweite Ausführungsform einer erfindungsgemäßen Vorrichtung zum Nivellieren von Gussmassen wie Fließestrich oder Pumpbeton,
- Figur 3: eine dritte Ausführungsform einer erfindungsgemäßen Vorrichtung zum Nivellieren von Gussmassen wie Fließestrich oder Pumpbeton, jeweils anhand einer prinzipiellen Seitenansicht,
- Figur 4: eine Ausführungsform eines Kopplungspartners, der mit der Vorrichtung koppelbar ist,
- Figur 5: eine prinzipielle Draufsicht einer erfindungsgemäßen Messeinrichtung zum Nivellieren von Gussmassen wie Fließestrich oder Pumpbeton, und
- Figur 6: eine prinzipielle Seitenansicht einer erfindungsgemäßen Messeinrichtung zum Nivellieren von Gussmassen wie Fließestrich oder Pumpbeton.

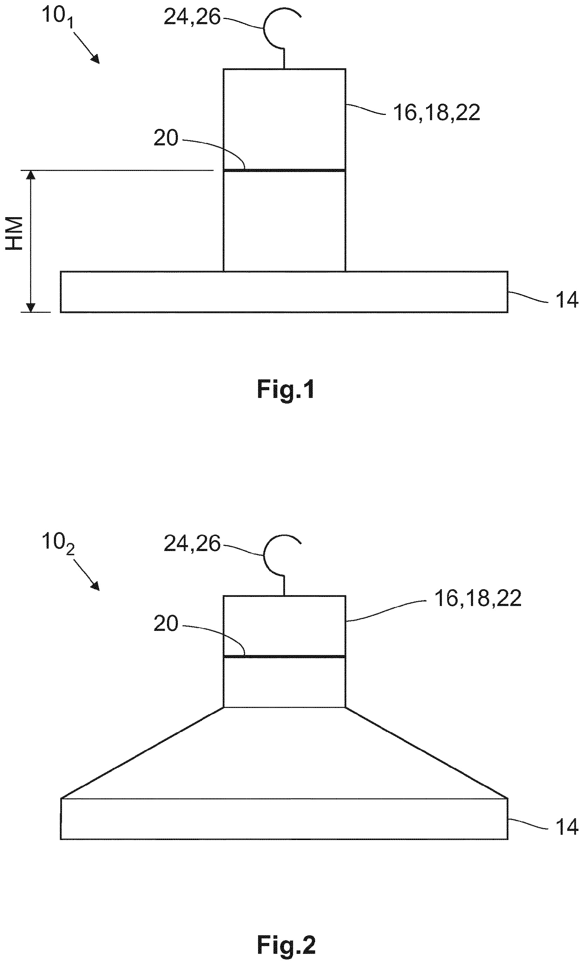

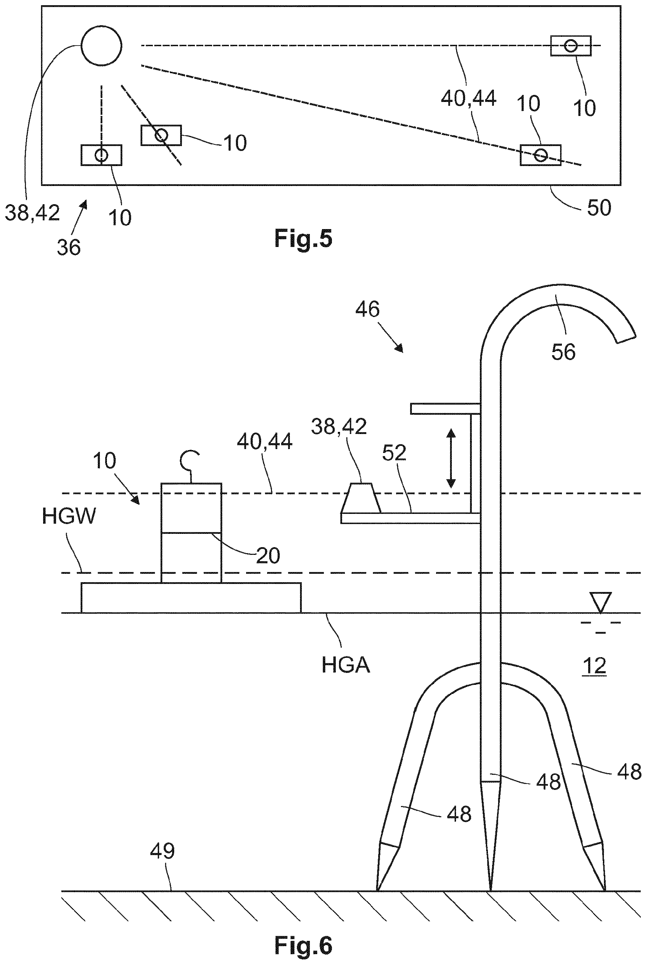

In Figur 1 ist ein erstes Ausführungsbeispiel einer erfindungsgemäßen Vorrichtung 10₁ zum Nivellieren von Gussmassen 12 wie Fließestrich oder Pumpbeton (siehe Figur 6) anhand einer prinzipiellen Seitenansicht gezeigt. Die Vorrichtung 10₁ umfasst einen Auftriebskörper 14, welcher auf der zu nivellierenden Gussmasse 12 schwimmt, einen Markierungsabschnitt 16, welcher als ein mit dem Auftriebskörper 14 verbundener Markierungskörper 18 ausgebildet ist, und eine auf dem Markierungsabschnitt 16 angeordnete Markierung 20, mit welcher die Höhe der Gussmasse 12 bestimmbar ist. Die Markierung 20 ist als ein farbiger Strich ausgeführt, insbesondere als ein schwarzer Strich, der sich deutlich vom Markierungskörper 18 abhebt.

Der Auftriebskörper 14 ist plattenförmig ausgestaltet und weist in der Draufsicht einen rechteckigen Querschnitt auf (siehe Figur 5). Der vom Auftriebskörper 14 bereitgestellte Auftrieb ist so gewählt, dass er die gesamte Vorrichtung 10₁ auf der Gussmasse 12 aufrecht hält und dabei so gut wie nicht in die Gussmasse 12 eintaucht. Die Vorrichtung 10₁ und insbesondere der Auftriebskörper 14 sind so ausgestaltet, dass die Unterseite des Auftriebskörpers 14 nahezu mit der Oberfläche der Gussmasse 12 fluchtet (vgl. Figur 6).

Der Markierungskörper 18 ist als ein Rohr 22 ausgestaltet und mit dem Auftriebskörper 14 auf eine geeignete Weise verbunden. Beispielsweise kann das Rohr 22 am Auftriebskörper 14 angeschweißt sein. Auf dem Rohr 22 ist die Markierung 20 angeordnet. Nicht dargestellt ist eine Ausführungsform, in welcher der Markierungskörper 18 und der Auftriebskörper 14 einteilig ausgeführt sind.

Darüber hinaus weist die Vorrichtung 10₁ eine Kopplungseinheit 24 auf, die in den dargestellten Ausführungsbeispielen als ein Haken 26 ausgestaltet ist.

In Figur 2 ist ein zweites Ausführungsbeispiel der erfindungsgemäßen Vorrichtung 10₂ anhand einer prinzipiellen Seitenschnittansicht gezeigt. Der Aufbau der Vorrichtung 10₁ nach dem zweiten Ausführungsbeispiel entspricht im Wesentlichen dem Aufbau der Vorrichtung 10₁ nach dem ersten Ausführungsbeispiel, wobei der Markierungskörper 18 der Vorrichtung 10₂ nach dem zweiten Ausführungsbeispiel trichterförmig ausgestaltet ist. Der Durchmesser des Markierungskörpers 18 bleibt ausgehend von der Kopplungseinheit 24 zunächst konstant, so dass der Markierungskörper 18 beim zweiten Ausführungsbeispiel einen rohrförmigen Abschnitt aufweist. Danach vergrößert sich der Durchmesser des Markierungskörpers 18 zum Auftriebskörper 14 hin konstant, bis dass der Durchmesser des Markierungskörpers 18 und des Auftriebskörpers 14 gleich sind. Folglich weist der Markierungskörper 18 einen trichterförmigen und in diesem Fall kegelförmigen Abschnitt auf. Hierdurch wird die Stabilität der Vorrichtung 10₂ erhöht und die Reinigung aufgrund der guten Zugänglichkeit der Oberflächen vereinfacht. Die Vorrichtung 10₂ nach dem zweiten Ausführungsbeispiel ist einteilig ausgeführt, der Auftriebskörper 14 und der Markierungskörper 18 bilden folglich ein zusammenhängendes Bauteil.

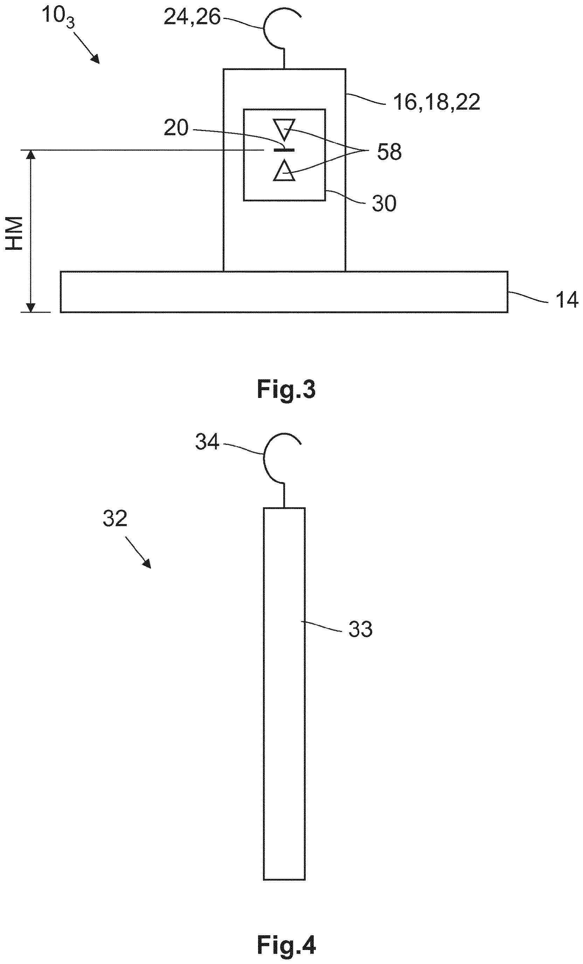

In Figur 3 ist ein drittes Ausführungsbeispiel einer erfindungsgemäßen Vorrichtung 10₃ anhand einer prinzipiellen Seitenansicht gezeigt. Der Aufbau der Vorrichtung 10₃ nach dem dritten Ausführungsbeispiel entspricht im Wesentlichen dem Aufbau der Vorrichtung 10₁ nach dem ersten Ausführungsbeispiel, wobei die Markierung 20 zur Interaktion mit elektromagnetischen Wellen 40 ausgebildet ist (siehe Figur 5). In diesem Ausführungsbeispiel muss die Markierung 20 für das menschliche Auge nicht notwendigerweise sichtbar sein.

Zudem weist die Vorrichtung 10₃ nach dem dritten Ausführungsbeispiel einen Sensor 30 auf, welcher die Interaktion der Markierung 20 mit den elektromagnetischen Wellen 40 registriert und welcher ein entsprechendes Signal erzeugt.

In Figur 4 ist ein Kopplungspartner 32 anhand einer prinzipiellen Darstellung gezeigt, der mit der Vorrichtung 10 nach einem der Ausführungsbeispiele koppelbar ist. Der Kopplungspartner 32 weist eine Stange 33 auf, an welcher an einem Ende ein Haken 34 angeordnet ist, der mit dem Haken 26 der Vorrichtung 10 in Eingriff gebracht werden kann.

Figur 5 zeigt eine prinzipielle Draufsicht und Figur 6 eine Seitenansicht einer erfindungsgemäßen Messeinrichtung 36 zum Nivellieren von Gussmassen 12 wie Fließestrich, Pumpbeton oder dergleichen. Die Messeinrichtung 36 umfasst eine Quelle 38 zum Erzeugen und zum höhendefinierten Aussenden von elektromagnetischen Wellen 40 und eine Vorrichtung 10 nach einem der vorherigen Ausführungsbeispiele. Die Figur 5 ist dabei so zu verstehen, dass dieselbe Vorrichtung 10 zu unterschiedlichen Zeitpunkten an vier unterschiedlichen Orten angeordnet ist. Alternativ können auch mehrere Vorrichtungen 10 gleichzeitig eingesetzt werden, was aber nicht unbedingt notwendig ist.

Die Quelle 38 ist als eine Laserquelle 42 ausgebildet, welche Laserstrahlen 44 erzeugt und in 360° aussendet.

Wie aus Figur 6 hervorgeht, umfasst die Messeinrichtung 36 ein höhenverstellbares Stativ 46 zum Aufnehmen der Quelle 38, wobei das Stativ 46 drei Standbeine 48 aufweist, die an ihren freien Enden spitz zulaufen. Anzumerken ist, dass das dargestellte Verhältnis des Stativs 46 zur Vorrichtung 10 nicht den tatsächlichen Verhältnissen entspricht. Üblicherweise sind die Vorrichtung 10 und das Stativ 46 in etwa gleich hoch.

Die Messeinrichtung 36 wird auf folgende Weise betrieben: Das Stativ 46 wird auf einem Boden 49 eines Raums 50, welcher mit einer Gussmasse 12, beispielsweise mit Flie-βestrich, ausgefüllt werden soll, gestellt. Anschließend wird die Laserquelle 42 fest mit einer Aufnahme 52 des Stativs 46 verbunden. Die Laserquelle 42 kann selbstnivellierend sein, so dass es nicht notwendig ist, die Laserquelle 42 exakt horizontal auszurichten. Die Aufnahme 52 ist höhenverstellbar. Um die Laserquelle 42 in der korrekten Höhe anzuordnen, kann wie folgt vorgegangen werden.

Als Ausgangspunkt für die Berechnung der Höhe, in welcher die Laserquelle 42 angeordnet werden muss, kann ein sogenannter Meterriss verwendet werden, worunter eine auf den Wänden eines Rohbaus aufgebrachte Strichmarkierung zu verstehen ist. Beispielsweise kann ein Meterriss mit der Bezeichnung OKFF + 1,00 m verwendet werden, wobei die Bezeichnung OKFF für "Oberkante des fertigen Fußbodens" steht. Der Meterriss OKFF + 1,00 m befindet sich folglich 1 m über der Oberkante des fertigen Fußbodens.

Zur Berechnung der gewünschten Höhe HGW der Gussmasse 12 wird die Höhe des Fußbodenbelags, beispielsweise ein Laminat von 0,01 m Höhe, zu den 1 m des Meterrisses hinzu addiert, so dass man in diesem Fall auf einen Wert von 1,01 m kommt, der vom Meterriss OKFF + 1m abgezogen werden muss. Dieser Wert muss noch um die Höhe HM der Markierung 20 der Vorrichtung 10 korrigiert werden, die beispielsweise 0,2 m betragen kann. Die Laserquelle 42 muss daher auf eine Höhe von 0,81 m unter dem Meterriss eingestellt werden, damit der Laserstrahl 44 auf die Markierung 20 trifft, wenn die gewünschte Höhe HGW der Gussmasse 12 erreicht ist. Der Abstand von 0,81 m unter dem Meterriss kann mittels eines Strichs an der Wand des Raums angezeichnet werden, so dass die von der Laserquelle 42 ausgesendeten Laserstrahlen 44 auf diesen Strich ausgerichtet werden kann.

Nachdem die Laserquelle 42 ausgerichtet worden ist, wird eine der erfindungsgemäßen Vorrichtungen 10 mit dem Kopplungspartner 24 an eine beliebige Stelle im Raum 50 angeordnet. Die Laserquelle 42 wird nun eingeschaltet. Wie aus den Figuren 5 und 6 ersichtlich, strahlt die Laserquelle 42 die Laserstrahlen 44 in einer nahezu horizontal verlaufenden Ebene durch den gesamten oder nahezu gesamten Raum 50 ab, wobei auch eine sektorförmige Abstrahlung denkbar ist. Die Gussmasse 12 wird mittels einer nicht dargestellten Förderpumpe in den Raum 50 gefördert. Das Niveau der Gussmasse 12 steigt allmählich an. Die aktuelle Höhe der Gussmasse 12 ist in Figur 6 mit HGA bezeichnet. Mit zunehmendem in den Raum 50 gepumptem Volumen der Gussmasse 12 wird auch die Vorrichtung 10 angehoben. Die Laserstrahlen 44 treffen auf die Markierung 20 der Vorrichtung 10, wenn die Gussmasse 12 die gewünschte Höhe HGW erreicht hat.

Wenn die Markierung 20 nicht zur Interaktion mit den Laserstrahlen 44 ausgebildet ist, muss die Person die Vorrichtung 10 beobachten und die Position der Laserstrahlen 44 kontrollieren. Wenn er erkennt, dass die Laserstrahlen 44 auf die Markierung 20 treffen oder kurz davor sind, schaltet er die Förderpumpe ab. Um die Kontrolle der Position der Laserstrahlen 44 auf dem Markierungsabschnitt 16 zu erleichtern, kann dieser insbesondere farblich so gestaltet werden, dass die Laserstrahlen 44 besonders gut sichtbar sind, wenn diese auf die Markierung 20 treffen.

Je nach Ausgestaltung der Vorrichtung 10 ist die Markierung 20 zur Interaktion mit den elektromagnetischen Wellen 40, in diesem Fall mit den Laserstrahlen 44, ausgebildet. In diesem Fall registriert der Sensor 30 das Auftreffen der Laserstrahlen 44 auf die Markierung 20 und erzeugt ein entsprechendes Signal, beispielsweise ein optisches oder ein akustisches Signal. Die Vorrichtung 10₃ nach dem dritten Ausführungsbeispiel weist zwei LEDs 58 auf (siehe Figur 3), welche in diesem Fall ein optisches Signal ausgeben. Die untere der LEDs 58 kann dann leuchten, wenn die Gussmasse 12 die gewünschte Höhe HMW noch nicht erreicht hat. Ist die gewünschte Höhe HMW überschritten, kann die obere der LEDs 58 leuchten. Ist die gewünschte Höhe HMW erreicht, kann eine zuständige Person die Förderpumpe stoppen. Alternativ oder kumulativ kann der Sensor 30 auch ein Funksignal erzeugen, welches an ein Smartphone der Person geschickt wird.

Nachdem die Förderpumpe abgeschaltet ist, sammelt die Person die Vorrichtung 10 mit dem Kopplungspartner 32 ein und nimmt das Stativ 46 zusammen mit der Laserquelle 42 aus der Gussmasse 12. Wie aus Figur 6 erkennbar, weist das Stativ 46 einen Halteabschnitt 56 auf, mit dem die Person das Stativ 46 ergreifen kann.

Üblicherweise ist die gewünschte Höhe HGW der Gussmasse 12 nicht sehr groß. Typische Höhen, die auch als Schichtdicken bezeichnet werden können, betragen zwischen 2 und 20 cm, wobei in den meisten Fällen die Schichtdicken unter 7 cm betragen. Das Stativ 46 muss so ausgestaltet sein, dass die Laserquelle 42 in einem entsprechend geringen Abstand über dem Boden 49 des Raums 50 angeordnet werden kann. Auch die Höhe HM der Markierung kann so angepasst werden, dass eine Bestimmung der gewünschten Höhe der Gussmasse auch bei geringen Schichtdicken mit handelsüblichen Laserquellen und mit der notwendigen Präzision möglich ist. Hierbei kann beispielsweise der als das Rohr 22 ausgebildete Markierungskörper 18 entsprechend länger ausgebildet werden.

Ebenfalls ist es denkbar, eine Verlängerung auf den Markierungskörper 18 aufzustecken, der eine Markierung aufweist, um so die Höhe HM der Markierung zu vergrößern.

### Bezugszeichenliste

- 10, 10₁ - 10₃: Vorrichtung
- 12: Gussmasse
- 14: Auftriebskörper
- 16: Markierungsabschnitt
- 18: Markierungskörper
- 20: Markierung
- 22: Rohr
- 24: Kopplungseinheit
- 26: Haken
- 30: Sensor
- 32: Kopplungspartner
- 33: Stange
- 34: Haken
- 36: Messeinrichtung
- 38: Quelle
- 40: elektromagnetische Wellen
- 42: Laserquelle
- 44: Laserstrahl
- 46: Stativ
- 48: Standbein
- 49: Boden
- 50: Raum
- 52: Aufnahme
- 54: Messskala
- 56: Halteabschnitt
- 58: LED

- HM: Höhe Markierung
- HGA: aktuelle Höhe der Gussmasse
- HGW: gewünschte Höhe der Gussmasse

## Patentansprüche

1. Vorrichtung zum Nivellieren von Gussmassen (12) wie Flie-βestrich oder Pumpbeton, umfassend
- einen Auftriebskörper (14), welcher auf der zu nivellierenden Gussmasse (12) schwimmt,
- einen Markierungsabschnitt (16), welcher als ein mit dem Auftriebskörper (14) verbundener Markierungskörper (18) ausgebildet ist oder vom Auftriebskörper (14) gebildet wird, und
- eine auf dem Markierungsabschnitt (16) angeordnete Markierung (20), mit welcher die Höhe der Gussmasse (12) bestimmbar ist.

2. Vorrichtung nach Anspruch 1,
**dadurch gekennzeichnet, dass** der Auftriebskörper (14) plattenförmig oder scheibenförmig ausgebildet ist.

3. Vorrichtung nach einem der Ansprüche 1 oder 2,
**dadurch gekennzeichnet, dass** der Markierungskörper (18) als ein Rohr (22) oder trichterförmig ausgebildet ist.

4. Vorrichtung nach den Ansprüchen 2 und 3,
**dadurch gekennzeichnet, dass** die Vorrichtung einteilig ausgeführt ist.

5. Vorrichtung nach einem der vorherigen Ansprüche,
**dadurch gekennzeichnet, dass** die Vorrichtung eine Kopplungseinheit (24) zum Koppeln der Vorrichtung (10) mit einem Kopplungspartner (32) aufweist.

6. Vorrichtung nach Anspruch 5,
**dadurch gekennzeichnet, dass** die Kopplungseinheit (24) als ein Haken (26) oder eine Öse ausgebildet ist.

7. Vorrichtung nach einem der vorherigen Ansprüche,
**dadurch gekennzeichnet, dass** die Markierung (20) zur Interaktion mit elektromagnetischen Wellen (40) ausgebildet ist.

8. Vorrichtung nach Anspruch 7,
**dadurch gekennzeichnet, dass** die Vorrichtung (10) einen Sensor (30) aufweist, welcher die Interaktion der Markierung (20) mit den elektromagnetischen Wellen (40) registriert und welcher ein entsprechendes Signal erzeugt.

9. Messeinrichtung zum Nivellieren von Gussmassen (12) wie Fließestrich oder Pumpbeton, umfassend
- eine Quelle (38) zum Erzeugen und zum höhendefinierten Aussenden von elektromagnetischen Wellen (40), und
- eine Vorrichtung (10) nach einem der vorherigen Ansprüche, wobei
- die Markierung (20) mit den elektromagnetischen Wellen (40) zum Nivellieren der Gussmassen (12) zusammenwirkt, wobei die Quelle (38) als eine Laserquelle (42) ausgebildet ist, welche Laserstrahlen (44) erzeugt.

10. Messeinrichtung nach einem der Ansprüche 9,
**dadurch gekennzeichnet, dass** die Messeinrichtung (36) ein Stativ (46) zum Aufnehmen der Quelle (38) umfasst.

11. Messeinrichtung nach Anspruch 10,
**dadurch gekennzeichnet, dass** das Stativ (46) eine höhenverstellbare Aufnahme (52) für die Quelle (38) aufweist.

## Claims

1. Apparatus for the leveling of casting compounds (12), such as flow screed or pumped concrete, comprising
- a buoyancy body (14), which floats on the casting compound (12) intended for leveling,
- a marking segment (16), which is implemented as a marking body (18) attached to the buoyancy body (14) or which is formed by the buoyancy body (14), and
- a marking (20) arranged on the marking segment (16), by means of which the level of the casting compound (12) can be determined.

2. Apparatus in accordance with claim 1,
**characterized in that** the buoyancy body (14) is implemented in a plate-like or a disc-like shape.

3. Apparatus in accordance with either of claims 1 or 2,
**characterized in that** the marking body (18) is implemented as a tube (22) or in a funnel-like shape.

4. Apparatus in accordance with the claims 2 and 3,
**characterized in that** the apparatus is implemented in one part.

5. Apparatus in accordance with any of the preceding claims,
**characterized in that** the apparatus comprises a coupling unit (24) for coupling the apparatus (10) to a coupling partner (32).

6. Apparatus in accordance with claim 5,
**characterized in that** the coupling unit (24) is implemented as a hook (26) or as an eyelet.

7. Apparatus in accordance with any of the preceding claims,
**characterized in that** the marking (20) is implemented to interact with electromagnetic waves (40).

8. Apparatus in accordance with claim 7,
**characterized in that** the apparatus (10) comprises a sensor (30) which registers the interaction of the marking (20) with the electromagnetic waves (40) and which sends a corresponding signal.

9. Measurement system for the leveling of casting compounds (12) such as flow screed or pumped concrete, comprising
- a source (38) for the generation and transmission of height-defined electromagnetic waves (40), and
- an apparatus (10) in accordance with any of the preceding claims, wherein
- the marking (20) interacts with the electromagnetic waves (40) to level the casting compounds (12), wherein the source (38) is implemented as a laser source (42) which generates laser beams (44).

10. Measurement system in accordance with claim 9,
**characterized in that** the measurement system (36) comprises a tripod (46) for holding the source (38).

11. Measurement system in accordance with claim 10,
**characterized in that** the tripod (46) comprises a height-adjustable holder (52) for the source (38).

## Revendications

1. Dispositif pour niveler des masses coulées (12) telles qu'une chappe liquide ou du béton pompé comprenant :
- un corps à force portante (14) qui flotte sur la masse coulée (12) à niveler,
- un segment de marquage (16) qui réalise un corps de marquage (18) relié au corps à force portante (14) ou qui est constitué par le corps à force portante (14), et
- un marquage (20) prévu sur le segment de marquage (16) et par lequel on définit la hauteur de la masse coulée (12).

2. Dispositif selon la revendication 1,
**caractérisé en ce que**
le corps à force portante (14) est en forme de plaque ou de disque.

3. Dispositif selon l'une des revendications 1 ou 2,
**caractérisé en ce que**
le corps de marquage (18) est sous la forme d'un tube (22) ou d'un entonnoir.

4. Assemblage microfluidique selon les revendications 2 et 3,
**caractérisé en ce que**
le dispositif est réalisé en une seule pièce.

5. Assemblage microfluidique selon l'une des revendications précédentes,
**caractérisé en ce que**
le dispositif comporte une unité de couplage (24) pour coupler le dispositif (10) à un partenaire de couplage (32).

6. Assemblage microfluidique selon la revendication 5,
**caractérisé en ce que**
l'unité de couplage (24) est réalisée sous la forme d'un crochet (26) ou d'un oeillet.

7. Assemblage microfluidique selon l'une des revendications précédentes,
**caractérisé en ce que**
le marquage (20) est réalisé pour interagir avec des ondes électromagnétiques (40).

8. Assemblage microfluidique selon la revendication 7,
**caractérisé en ce que**
le dispositif (10) comporte un capteur (30) qui enregistre l'interaction du marquage (20) avec les ondes électromagnétiques (40) et génère un signal correspondant.

9. Installation de mesure pour niveler des masses coulées (12) telles qu'une chappe liquide ou du béton pompé comprenant :
- une source (38) générant et émettant des ondes électromagnétiques (40) définissant une hauteur, et
- un dispositif (10) selon l'une des revendications précédentes, dans lequel
- le marquage (20) coopère avec les ondes électromagnétiques (40) pour niveler la masse coulée (12), la source (38) étant réalisée comme source laser (42) qui génère des rayons laser (44).

10. Installation de mesure selon la revendication 9,
**caractérisée en ce que**
l'installation de mesure (36) comprend un pied (46) pour recevoir la source (38).

11. Installation de mesure selon la revendication 10,
**caractérisée en ce que**
le pied (46) comporte un récepteur (52) de hauteur réglable pour la source (38).
